# EUROPEAN PATENT APPLICATION

(11) **EP 3 546 708 A1**
(43) Date of publication of application: **02.10.2019**
(21) Application number: 19161474.2
(22) Date of filing: 08.03.2019
(51) Int. Cl.: F01D 25/24, F02C 7/20

(54) **TURBINE ENGINE**

(30) Priority: 29.03.2018 GB 201805146
(71) Applicant: Rolls-Royce plc, London SW1E 6AT (GB)
(72) Inventor: Stretton, Richard, Derby, Derbyshire DE24 8BJ (GB)
(74) Representative: Rolls-Royce plc

(57) **Abstract**

A gas turbine engine (10) for an aircraft (90) comprises an engine core (11, 60) comprising a turbine (19), a compressor (14), and a core shaft (26) connecting the turbine to the compressor; an engine casing (61) arranged to at least partially surround the engine core (11), the engine casing comprising at least one first elongate formation (67) on its outer surface, the first elongate formation extending in an axial direction; and a housing (55) arranged to surround the engine core (11, 60), the housing (55) comprising at least one second elongate formation (57) on an inner surface of the housing, the second elongate formation (57) extending in the axial direction. The engine casing (61) is detachably connected to the housing (55) by interengagement of the first and second elongate formations (57, 67).

## Description

The present disclosure relates to a turbine engine, and more specifically to an aircraft engine, such as a gas turbine engine, which is arranged to be reversibly separable into two or more separate modules, for example separating an engine housing from an engine core.

As engine and fan diameters have increased in size, many aircraft engines have become too large to be easily transported by traditional air freight or road. Splitting the engine into multiple parts for transport is a known option for larger aircraft engines. In known examples, a plurality of bolted connections are provided at the front and rear edges of outlet guide vanes and form a torque box at the base of the outlet guide vanes. The bolts can be removed to allow the outlet guide vanes to be detached from the engine core. Obtaining access to the bolted connections is often difficult and time-consuming, and requires the removal of fairings.

According to a first aspect there is provided a gas turbine engine for an aircraft. The gas turbine engine comprises:
an engine core comprising a turbine, a compressor, and a core shaft connecting the turbine to the compressor;
an engine casing arranged to at least partially surround the engine core, the engine casing comprising at least one first elongate formation on its outer surface, the at least one first elongate formation extending in an axial direction; and
a housing arranged to at least partially surround the engine core, the housing comprising at least one second elongate formation on an inner surface of the housing, the second elongate formation extending in the axial direction.

The engine casing is detachably connected to the housing, the detachable connection comprising interengagement of the first and second elongate formations.

The ability to split the engine into multiple parts, or modules, may facilitate transport, in particular when it is only necessary to transport a portion of the engine (such as for maintenance). The combination of the engine core and the engine casing may be thought of as an engine core module.

The detachable connection may enable a faster, more repeatable and/or more efficient core swap; i.e. the engine core may be removed from, and replaced in, the housing more easily.

In addition, the detachable connection described may not have or require a bolted connection in a front end region of the detachable connection. If there is a bolted connection, it may be in a rear end region. There may therefore be a bolted connection only in a rear end region of the detachable connection, for example in the region of a rear end of the first and second elongate formations.

The lack of a bolted connection at the front end may do at least one of the following:
(i) allow the connection to be more radially compact (lower profile), which may be beneficial from an aerodynamic perspective - potentially facilitating optimisation of the forward hub line of outlet guide vanes;
(ii) simplify installation and removal of the engine core, for example by avoiding a need to remove forward fairings for access; and
(iii) save time, due to the simple, e.g. slotted sliding, connection (time previously required to access forward bolts and forward access fairings may be reduced or eliminated).

The elongate formations may aid alignment and initial engagement of the housing and engine core.

There may be a plurality of first elongate formations.

There may be a plurality of second elongate formations.

The elongate formations may be straight. The elongate formations may be oriented in the axial direction. The elongate formations may be aligned with the axial direction. The elongate formations may be described as axial elongate formations.

In such arrangements, the elongate formations may slide axially when engaged, such that the engine core can be slid into/out of the housing in a straight line, without rotation.

The elongate formations may be curved. The elongate formations may extend in the axial direction whilst curving around the axis.

In such arrangements, the elongate formations may act as a screw thread, for example a multi-start screw thread. The elongate formations may only slide axially when engaged when also rotated, such that the engine core can be slid into/out of the housing with rotation.

The axial load generated under fan blade off (FBO) torque may be used to plastically deform a rear panel (e.g. a rear panel forming part of a rear bolted connection). The skilled person will appreciate that this may serve to reduce FBO loads seen at the core, and to increase fan to housing tip clearance to reduce or minimise fan to housing contact under FBO.

The housing may comprise a plurality of outlet guide vanes extending inwardly towards the engine casing.

The housing may comprise an outlet guide vane hub connected to an inner end of each outlet guide vane. The at least one second elongate formation may be on (integral with, or connected to) an inner surface of the outlet guide vane (OGV) hub. The inner surface of the OGV hub may provide the inner surface of the housing in such arrangements. The elongate formations may be positioned to align with the OGV vanes, with the same or reduced number as compared to the number of the OGV vanes. Alternatively the number and position of the elongate formations may be independent of the number of OGV vanes and the circumferential positions thereof.

Alternatively, each of the plurality of outlet guide vanes may have a second elongate formation on (integral with, or connected to) an inner end region of the outlet guide vane, such that the interengagement of the first and second elongate formations connects each outlet guide vane to the engine casing. In such arrangements, the casing may act as an outlet guide vane hub, and no separate outlet guide vane hub may be needed. The inner surface of each outlet guide vane may provide the inner surface of the housing in such arrangements; alternatively, the outlet guide vanes may be seen as the second elongate formations.

The at least one first and second elongate formations may comprise at least one slot extending in, and optionally oriented in, the axial direction and at least one protrusion extending in, and optionally oriented in, the axial direction and arranged to be received in the corresponding slot. Corresponding protrusions and slots, arranged to allow sliding whilst interengaged, may be described as a slotted sliding connection.

There may be a plurality of first elongate formations and a plurality of second elongate formations. The number of first elongate formations may be equal to the number of second elongate formations.

The at least one first elongate formation may be or comprise a protrusion and the at least one second elongate formation may be or comprise a slot arranged to receive the protrusion. The or each protrusion may take the form of an axial stiffener.

The first and second elongate formations may be arranged with rotational symmetry around the engine core.

Each first elongate formation may be a slot, and each second elongate formation a protrusion, or *vice versa*. Alternatively, the first and second elongate formations may each comprise a mixture of slots and protrusions, for example alternating slot-protrusion-slot on the engine core, and protrusion-slot-protrusion on the housing, around the circumference. Paired slots and protrusions arranged to interengage may be referred to as "slotted features" or "sliding features".

In some arrangements, for example when the protrusions take the form of axial stiffeners, the slotted features may be primarily radial and may rely on the stiffness of the OGV hub to maintain adequate roundness. The skilled person will appreciate that, as the slots and protrusions do not limit radial movement, whilst it is possible for the slots and protrusions to transfer the desired loads in combination around the circumference of the engine core, the OGV hub and//or engine casing may deform and take a more elliptical shape. For example, radial depth constraints within the aerolines may mean that the OGV hub cannot be tuned to a desired stiffness to maintain roundness. In order to control the OGV hub and/or casing deformation i.e. to keep either or both more circular, a T-slot as described below may be used, for example, to restore the casing/hub roundness by limiting/controlling local deflection in the radial direction.

Alternative or additional roundness control may therefore be provided by means of additional radial restraint provided by the first and second elongate formations, for example by means of a T slot.

In such arrangements, the at least one protrusion may be T-shaped in cross-section and the at least one slot may be arranged to receive a head of the T-shaped protrusion, for example with the edges of the slot being C-shaped in cross-section and/or the slot being T-shaped in cross-section. This may be described as a T-slot. Such an arrangement may help to react radial loads. The skilled person will appreciate that the T-slot design may be used whether or not the stiffness of the OGV hub is sufficient to maintain adequate roundness. The skilled person will appreciate that shapes other than a T could be used; for example a Y-shape, +-shape, or X-shape, and that the shape of the slot may be adjusted accordingly.

The or each slot may be closed at one end. Such an arrangement may serve to limit relative axial movement of the first and second formations.

The or each slot may be closed at a front end, such that the closed end is arranged to limit movement of a corresponding protrusion in a forward axial direction within the or each slot.

The first and second elongate formations may be arranged to allow axial sliding movement between the housing and the engine casing.

The detachable connection may further comprise a bolted connection in the region of a back end of a first or second elongate formation.

The detachable connection may not comprise a bolted connection in the region of a front end of a first or second elongate formation. The lack of a bolted connection in the front region may allow the connection to be more radially compact, which may improve aerodynamics. The lack of such a bolted connection may also reduce the time needed for removal and replacement of the engine core.

The only bolted connection may be at a rear end of outlet guide vanes of the engine.

The only bolted connection may be at a rear end of a torque box of the engine.

The detachable connection may further comprise one or more birdsmouth joints, for example one or more L-shaped pegs, with a head of the or each L-shaped peg oriented in an axial direction, such as a forward axial direction, and arranged to be received in an aperture oriented in an axial direction. The engagement of the peg with the aperture may serve to limit relative radial movement of the engine core and housing, and may help to react radial loads. The pegs may be on the engine casing and the apertures in the housing, or *vice versa.*

According to a second aspect, there is provided a module of a gas turbine engine for an aircraft, the module comprising:
an engine core comprising a turbine, a compressor, and a core shaft connecting the turbine to the compressor; and
an engine casing arranged to at least partially surround the engine core, the engine casing comprising at least one first elongate formation on its outer surface, the at least one first elongate formation extending in an axial direction;
wherein the engine casing is arranged to be detachably connectable to a housing, the detachable connection comprising interengagement of the at least one first elongate formation with at least one second elongate formation on the housing.

The module may be referred to as an engine core module.

The first elongate formation may be oriented in the axial direction. The first elongate formation may be straight.

The detachable connection may have any of the features described with respect to the first aspect.

According to a third aspect, there is provided a housing arranged to be mounted on an aircraft and to at least partially surround an engine core module of a gas turbine engine of the aircraft, the housing comprising at least one second elongate formation, the at least one second elongate formation extending in the axial direction. The housing is arranged to be detachably connectable to the engine core module, the detachable connection comprising interengagement of the at least one second elongate formation with at least one first elongate formation on the engine core module.

The second elongate formation may be oriented in the axial direction. The second elongate formation may be straight.

The detachable connection may have any of the features described with respect to the first aspect.

According to a fourth aspect, there is provided a kit of parts for making a gas turbine engine according to the first aspect, the kit of parts comprising:
an engine core module according to the second aspect; and
a housing according to the third aspect.
The kit of parts may further comprise one or more bolts.

The detachable connection between the engine core module and the housing may have any of the features described with respect to the first aspect.

According to a fifth aspect, there is provided a gas turbine engine in which outlet guide vanes of the gas turbine engine are detachably connected to an engine casing surrounding the engine core, without a separate outlet guide vane hub.

According to a sixth aspect, there is provided a method of detaching a core engine module of a gas turbine engine from a housing arranged to be mounted on an aircraft, the method comprising sliding the core engine module, optionally backwards, with respect to the housing until interengaged first and second elongate formations on the outer surface of the module and on the housing respectively are disengaged.

The method may comprise rotating the core engine module with respect to the housing to allow it to slide.

The method may further comprise, prior to sliding the core engine module, removing one or more bolts from a region of a back end of a first and/or second elongate formation of the interengaged first and second elongate formations.

The method may not comprise removing any bolts from a region of a front end of a first or second elongate formation of the interengaged first and second elongate formations.

The method may further comprise, prior to sliding the core engine module, removing one or more blades from a fan or propeller of the gas turbine engine.

The method may form the kit of parts of the fourth aspect.

The detachable connection may have any of the features described with respect to the first aspect.

According to a seventh aspect, there is provided a method of attaching a core engine module of a gas turbine engine to a housing arranged to be mounted on an aircraft, the method comprising:
positioning the module and the housing so as to align one or more first elongate formations on the module with one or more second elongate formations on the housing; and
sliding the module, optionally forwards, with respect to the housing with the first and second elongate formations engaged.

The sliding comprises movement along the axial direction. The sliding may be linear along the axial direction, or may involve rotational movement around the axial direction as well as movement along the axial direction.

The method may further comprise, after sliding the core engine module into place, inserting one or more bolts to form a bolted connection in a region of a back end of a first or second elongate formation of the interengaged first and second elongate formations.

The method may not comprise inserting any bolts to form a bolted connection in a region of a front end of a first or second elongate formation of the interengaged first and second elongate formations.

The method may further comprise, after sliding the core engine module into place, attaching one or more blades to form a fan or propeller of the gas turbine engine.

The method may further comprise inserting one or more shims so as to adjust relative axial position of the core engine module and housing, for example between the flange of a bolted rear connection and the elongate formations. Shimming may allow adjustment of the fan tip clearance, which may be used to provide performance benefits in service.

The method may be performed using the kit of parts of the fourth aspect.

The detachable connection may have any of the features described with respect to the first aspect.

The first and second elongate formations may be useful in aligning and guiding the initial engagement of the engine core module with the housing.

In the sixth and seventh aspects, the sliding of the module with respect to the housing may be backwards with respect to the housing for detaching the module and forwards with respect to the housing for attaching the module, or *vice versa.* In some arrangements, both options may be possible.

According to an eighth aspect, there is provided a method of adjusting the axial position of a housing of an aircraft engine relative to an engine core of the aircraft engine so as to adjust fan tip clearance, the method comprising:
sliding the engine core with respect to the housing;
inserting or removing one or more shims so as to adjust an extreme relative axial position of the core engine module and housing; and
securing the engine core to the housing in the extreme relative axial position.

The method may further comprise assessing the fan tip clearance so as to determine how many shims to use, and/or the size of shim(s) to use.

The method may further comprise unfastening the engine core from the housing prior to the sliding step.

The sliding may comprise relative movement in an axial direction using interengaged first and second elongate formations on the engine core and housing, respectively. The elongate formations may comprise interengaging slots and protrusions. The elongate formations may extend along the axial direction. The elongate formations may be as described for any preceding aspect.

The unfastening and securing may comprise removing and replacing a bolt into a bolted connection toward the rear of the elongate formations; for example a rear bolted plate or flange extending from either the housing or the engine core, which is bolted to the other of the housing and the engine core.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds). These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.

The radius of the fan may be measured between the engine centreline and the tip of a fan blade at its leading edge. The fan diameter (which may simply be twice the radius of the fan) may be greater than (or on the order of) any of: 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350cm, 360cm (around 140 inches), 370 cm (around 145 inches), 380 (around 150 inches) cm or 390 cm (around 155 inches). The fan diameter may be in an inclusive range bounded by any two of the values in the previous sentence (i.e. the values may form upper or lower bounds).

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 250 cm to 300 cm (for example 250 cm to 280 cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 320 cm to 380 cm may be in the range of from 1200 rpm to 2000 rpm, for example in the range of from 1300 rpm to 1800 rpm, for example in the range of from 1400 rpm to 1600 rpm.

In use of the gas turbine engine, the fan (with associated fan blades) rotates about a rotational axis. This rotation results in the tip of the fan blade moving with a velocity Uₜᵢₚ. The work done by the fan blades 13 on the flow results in an enthalpy rise dH of the flow. A fan tip loading may be defined as dH/Uₜᵢₚ², where dH is the enthalpy rise (for example the 1-D average enthalpy rise) across the fan and Uₜᵢₚ is the (translational) velocity of the fan tip, for example at the leading edge of the tip (which may be defined as fan tip radius at leading edge multiplied by angular speed). The fan tip loading at cruise conditions may be greater than (or on the order of) any of: 0.3, 0.31, 0.32, 0.33, 0.34, 0.35, 0.36, 0.37, 0.38, 0.39 or 0.4 (all units in this paragraph being Jkg⁻¹K⁻¹/(ms⁻¹)²). The fan tip loading may be in an inclusive range bounded by any two of the values in the previous sentence (i.e. the values may form upper or lower bounds).

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, or 17. The bypass ratio may be in an inclusive range bounded by any two of the values in the previous sentence (i.e. the values may form upper or lower bounds). The bypass duct may be substantially annular. The bypass duct may be radially outside the core engine. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds).

Specific thrust of an engine may be defined as the net thrust of the engine divided by the total mass flow through the engine. At cruise conditions, the specific thrust of an engine described and/or claimed herein may be less than (or on the order of) any of the following: 110 Nkg⁻¹s, 105 Nkg⁻¹s, 100 Nkg⁻¹s, 95 Nkg⁻¹s, 90 Nkg⁻¹s, 85 Nkg⁻¹s or 80 Nkg⁻¹s. The specific thrust may be in an inclusive range bounded by any two of the values in the previous sentence (i.e. the values may form upper or lower bounds). Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). The thrust referred to above may be the maximum net thrust at standard atmospheric conditions at sea level plus 15 deg C (ambient pressure 101.3kPa, temperature 30 deg C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds). The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a blisk or a bling. Any suitable method may be used to manufacture such a blisk or bling. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.

The fan of a gas turbine as described and/or claimed herein may have any desired number of fan blades, for example 16, 18, 20, or 22 fan blades.

As used herein, cruise conditions may mean cruise conditions of an aircraft to which the gas turbine engine is attached. Such cruise conditions may be conventionally defined as the conditions at mid-cruise, for example the conditions experienced by the aircraft and/or engine at the midpoint (in terms of time and/or distance) between top of climb and start of decent.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be the cruise condition. For some aircraft, the cruise conditions may be outside these ranges, for example below Mach 0.7 or above Mach 0.9.

Purely by way of example, the cruise conditions may correspond to standard atmospheric conditions at an altitude that is in the range of from 10000m to 15000m, for example in the range of from 10000m to 12000m, for example in the range of from 10400m to 11600m (around 38000 ft), for example in the range of from 10500m to 11500m, for example in the range of from 10600m to 11400m, for example in the range of from 10700m (around 35000 ft) to 11300m, for example in the range of from 10800m to 11200m, for example in the range of from 10900m to 11100m, for example on the order of 11000m. The cruise conditions may correspond to standard atmospheric conditions at any given altitude in these ranges.

Purely by way of example, the cruise conditions may correspond to: a forward Mach number of 0.8; a pressure of 23000 Pa; and a temperature of -55 deg C.

As used anywhere herein, "cruise" or "cruise conditions" may mean the aerodynamic design point. Such an aerodynamic design point (or ADP) may correspond to the conditions (comprising, for example, one or more of the Mach Number, environmental conditions and thrust requirement) for which the fan is designed to operate. This may mean, for example, the conditions at which the fan (or gas turbine engine) is designed to have optimum efficiency.

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

Embodiments will now be described by way of example only, with reference to the Figures, in which:
Figure 1 is a sectional side view of a gas turbine engine;
Figure 2 is a close up sectional side view of an upstream portion of a gas turbine engine, with a detachable connection portion marked;
Figure 3 is a partially cut-away view of a gearbox for a gas turbine engine;
Figure 4 is a sectional view, in an axial plane, of a detachable connection portion of a different gas turbine engine from that shown in Figures 1 and 2, in which the outlet guide vane and structural strut are provided by the same member;
Figures 5A and 5B are sectional views of the detachable connection portion of the engine core module and of the engine housing, respectively;
Figure 6 is a sectional view, in a radial plane, of the detachable connection portion of the gas turbine engine of Figure 4, showing interlocking formations;
Figure 7 is a sectional view, in an axial plane, of a different detachable connection portion including birdsmouth joints;
Figure 8 is a radial sectional view and an axial section view of the detachable connection portion shown in Figure 7;
Figure 9 is a sectional view of different interlocking formations from those shown in Figure 6;
Figure 10 is a schematic plan view of an aircraft illustrating relative motion of interlocking formations;
Figure 11 is a schematic illustration of a method of detaching a module of a gas turbine engine from a gas turbine engine housing; and
Figure 12 is a schematic illustration of a method of attaching a module of a gas turbine engine to a gas turbine engine housing.

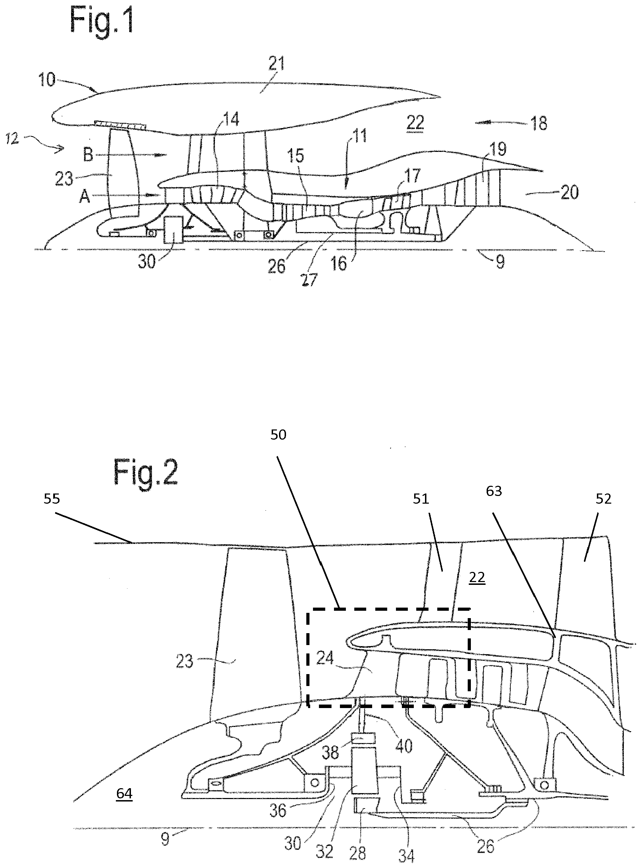

Figure 1 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22.

The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

An exemplary arrangement for a geared fan gas turbine engine 10 is shown in Figure 2. The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

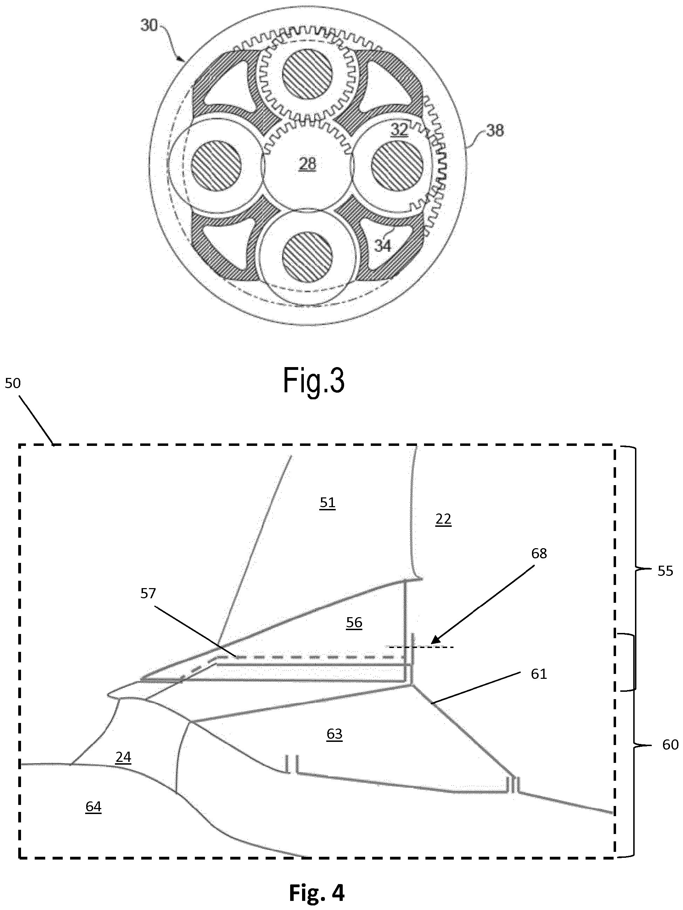

The epicyclic gearbox 30 is shown by way of example in greater detail in Figure 3. Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32. The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 20, 22 meaning that the flow through the bypass duct 22 has its own nozzle that is separate to and radially outside the core engine nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

The bypass duct 22 lies between the engine core module 60 and a housing 55, which may be a fan case. The engine core module 60 comprises an engine core 11 and an engine core casing 61. The core casing 61 may be integral with the engine core 11, or may be provided by one or more separate components. The casing 61 of the engine core module 60 (referred to as a core casing 61) and a surface of the housing 55 may be said to define the bypass duct 22.

In the arrangement shown, the housing 55 is a fan case, and may be a part of the nacelle 21.

Parts of the housing 55 may extend into the bypass duct 22; in the arrangement shown in Figures 1 and 2, one or more outlet guide vanes 51 and structural struts 52 extend into the bypass duct 22, from the outer part of the housing 55 towards the engine core 60. The outlet guide vanes 51 and structural struts 52 are a part of the housing 55 as defined herein. The structural struts 52 may also act as guide vanes.

The structural struts 52 serve to transfer forces to a torque box 63 in the engine core 60. In the arrangement shown in Figure 4, the outlet guide vane 51 is also the structural strut 52; a single member provides both functions.

The torque box 63 is a closed shape at or near the inner end of each structural strut 52. The torque box 63 is intended to react loads exerted on the engine 10. The torque box 63 provides the primary structural connection between the housing 55 and the core casing 61.

The outlet guide vanes 51, 52 and torque box 63 react the normal operating aerodynamic and inertia forces exerted on the housing 55 back to the core casing 61. Additionally the structure is intended to be capable of reacting failure loads (such as Fan Blade Off (FBO) where a released blade should be contained by the external casing 55). The skilled person will appreciate that the role of a torque box 63 is to react the six degrees of freedom between the housing 55 and the engine core 60.

The engine core module 60 is arranged to be detachably connected to the housing 55. A portion of each of the engine core module 60 and the housing 55 provides a detachable connection between the two.

In the arrangement shown in Figure 4, each outlet guide vane 51 is connected to an outlet guide vane hub 56. Each outlet guide vane 51 may be connected to the outlet guide vane hub 56 by any suitable means known in the art, for example one or more of welding or bolted connections.

The lower part of the torque box 63 (in the orientation shown in Figures 1, 2, 7 and 8, for example) may be considered to be a part of the engine core casing 61, the front and rear panels/structure may be considered shared between the OGV hub 56 and engine core casing 61, and the upper surface may be considered to be a part of the OGV hub. In alternative arrangements, the whole of the torque box 63 may be thought of as part of the engine casing 61, with a lower surface of the OGV hub connected to an upper surface of the torque box 63.

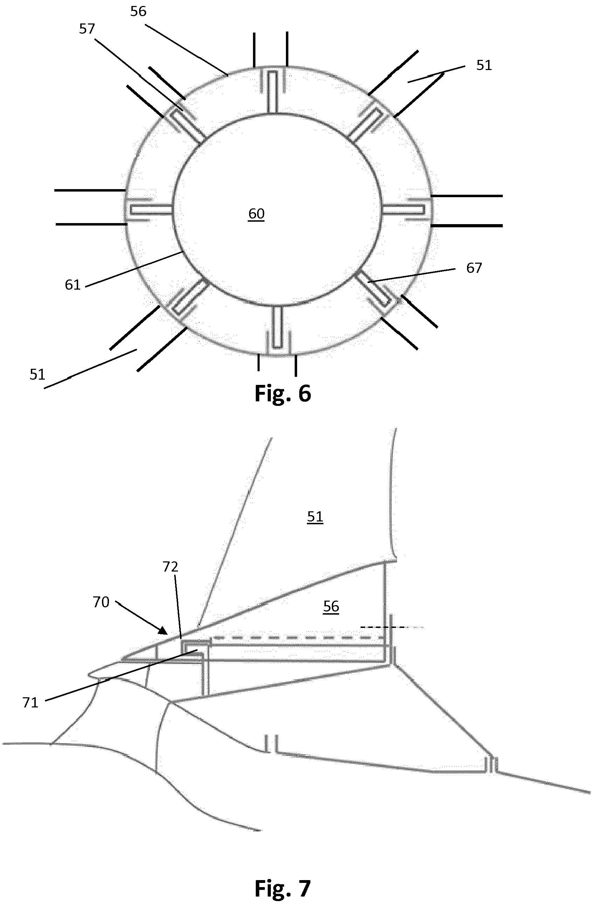

As shown in Figure 6, in the arrangement being described the outlet guide vane hub 56 is substantially circular in cross-section (in a radial plane), with outlet guide vanes 51 radiating outwardly therefrom.

In the arrangement shown, the outlet guide vane hub 56 is a part of the housing 55; the engine core 11/ engine core module 60 is separable from the outlet guide vane hub 56. In alternative arrangements, the outlet guide vane hub 56 may be integral with the engine core 60, for example with a casing 61 thereof. In such arrangements, each outlet guide vane 51 may be individually detachably connected to the engine casing 61. In still further arrangements, a portion of each outlet guide vane 51 may be integral with the engine core 60 and a portion with the housing 55, and the outlet guide vane portions may be detachably connected where they meet.

The detachable connection 50 is provided by first and second elongate formations 57, 67.

The one or more first elongate formations 67 are provided on the engine core module 60.

The one or more second elongate formations 57 are provided on the housing 55.

In the arrangement shown, the detachable connection is between the inner surface of the outlet guide vane hub 56 and an outer surface of the engine casing 61.

In the arrangement shown, there is a plurality of first elongate formations 67 and a plurality of second elongate formations 57; more specifically eight first elongate formations 67 and eight second elongate formations 57 are provided. In alternative arrangements, the number of elongate formations 57, 67 may be different. There may be between 1 and 20 elongate formations 57, 67. For example, there may be 1, 3, 4, 6, 10 or 12 first elongate formations 67, and an equal or different number of second elongate formations 57.

The elongate formations 57, 67 extend along an axial direction, i.e. a direction aligned with the rotational axis 9. In the arrangement shown, the axial direction is also aligned with the direction of air flow through the engine 10, from front to back, and with the length of the aircraft 90.

In the arrangement shown, the elongate formations 57, 67 are straight. The elongate formations 57, 67 extend axially in parallel straight lines. The elongate formations 57, 67 extend along, and are oriented along/aligned with, the axis 9 in such arrangements. In alternative arrangements, the elongate formations 57, 67 may bend or curve, for example forming a spiral or a portion of a spiral around the engine core 60. The elongate formations 57, 67 extend along, and curve around, the axis 9 in such arrangements.

In the arrangement shown, the first elongate formations 67 are protrusions extending radially outward from the engine core 11, 60. More specifically, the protrusions 67 extend from an outer surface of the casing 61 of the engine core module 60 in the arrangement shown. The protrusions 67 extend along the outer surface of the casing 61 in the axial direction. The protrusions 67 may be referred to as axial ribs 67 or axial flanges 67.

In the arrangement shown, the first elongate formations 67 serve as axial stiffeners which may serve to increase rigidity of the engine core 60 as well as to engage with the housing 55.

In the arrangement shown, the second elongate formations 57 are slots formed by pairs of walls extending radially inward from the housing 55. More specifically, the slots 57 extend along an inner surface of the outlet guide vane hub 56 in the arrangement shown. In alternative or additional arrangements, the slots 57 may be provided by recesses into the housing 55 instead of, or as well as, walls.

In alternative or additional arrangements, some or all of the first or second elongate formations 57, 67 may be replaced with rods, supported at one end and extending parallel to, and spaced from, the housing 55 or engine casing 61, as applicable. In such arrangements, some or all of the second or first elongate formations 57, 67 may comprise a channel arranged to engagingly receive the rod. The rod and channel may have, for example, circular, square, or rectangular cross sections. The support may be at a rear end if the rod 67 is connected to the engine casing 61, or at a front end if the rod 57 is connected to the housing 55, so as to facilitate sliding of the engine core module 60 into the housing 55 from back to front. In arrangements in which the rod 57 is connected to the housing 55 and supported on the housing at its front end, the rod may have an aperture at its back end to accept a bolted connection through one or more flanges, the or each flange being connected to the housing 55 or to the engine core module 60.

In alternative or additional arrangements, the first and second elongate formations 67, 57 may be replaced with opposed interlocking protrusions, for example elongate protrusions with re-entrant ends, which may appear as interlocking hooks in cross-section.

The first and second elongate formations 67, 57 are parallel to each other and spaced around the outer circumference of the casing 61/ the inner circumference of the housing 55 as applicable, in the arrangement shown. The formations 67, 57 are equally spaced around the circumference in the arrangement shown. In alternative or additional arrangements, the formations 67, 57 may be unequally spaced.

The protrusions 67 are arranged to fit within the slots 57. The protrusions 67 and slots 57 are arranged to allow sliding engagement between the housing 55 and engine core 11/ core module 60. The housing 55 and the engine core 60 can therefore slide relative to each other, in the axial direction, with the first and second elongate formations 67, 57 engaged.

In the arrangement shown, the elongate formations 57, 67 are straight - the engine core 60 can therefore slide relative to the housing 55, with the formations 57. 67 engaged, in a straight line, with no rotation around the axis 9. In alternative arrangements in which the elongate formations 57, 67 bend or curve, for example forming a spiral or a portion of a spiral around the engine core 11/ core module 60, the core 11/ core module 60 may be rotated and slide forward into the housing/backward out of the housing 55 as it is rotated. The interengaging formations 57, 67 may therefore act as a screw thread; in arrangements in which there are a plurality of first elongate formations 67 and a plurality of second elongate formations 57, the screw thread would be a multi-start screw thread. In arrangements in which there is a single first elongate formation 67 and a single second elongate formation 57, the screw thread may be a single-start screw thread.

In various arrangements, the curved slots may be configured such that any fan blade-off (FBO) grab torque seen at the housing 55 would transfer to the curved slot 57. The torsional load across the slotted interface may be configured to axially displace the rear bolted panel 69 rearwards (plastic deformation of the rear panel) in such arrangements. This may alleviate FBO loads directly seen by the core 11, 60 and may also increase the FBO tip clearance to reduce fan tip to housing tip rubs under an FBO event.

In alternative or additional arrangements, the first elongate formations 67 may be slots and the second elongate formations 57 may be protrusions. Alternatively, a mixture of slots and protrusions may be provided on each of the housing 55 and the engine core 60. Using a mixture of slots and protrusions (or other forms of elongate formations) may limit the orientations in which the engine core 60 could be fitted into the housing 55.

In the arrangement shown, the outlet guide vanes 51 are aligned with the pairs of elongate formations 57, 67. The outlet guide vanes 51 extend radially outward from the outlet guide vane hub 56 collinearly with the inward extension of the slots 57 on the inner surface of the hub 56. In alternative arrangements, the outlet guide vanes 51 may not be aligned with the pairs of elongate formations 57, 67. In the arrangement shown, there is the same number of outlet guide vanes 51 as of pairs of elongate formations 57, 67. In alternative arrangements, there may be more of fewer outlet guide vanes 51 than pairs of elongate formations 57, 67.

In arrangements in which each outlet guide vane 51 may be individually detachably connected to the engine casing 61, with no separate outlet guide vane hub, each outlet guide vane 51 may have an elongate formation 57 on or associated with its inner end (which may be referred to as an OGV foot), or the inner end/OGV foot may serve as a protrusion for engagement with a corresponding slot 67 in an outer surface of the engine casing 61. In other arrangements, the outlet guide vanes 51 may form part of the engine core module 60, and each may have an elongate formation 67 on or associated with its outer end, or the outer end may serve as a protrusion for engagement with a corresponding slot 57 in an inner surface of the housing 55. In other arrangements, a portion of each outlet guide vane 51 may form part of the housing 55, and the remainder may form part of the engine core module 60; the elongate formations 57, 67 may be provided on the portion edges, where the two portions of each outlet guide vane meet.

In the arrangement being described, the second elongate formations 57 are provided in the outlet guide vane hub 56 and the outlet guide vane hub 56 is wider (in the axial direction) at its widest point than the outlet guide vane 51 by around 20-30%. In this arrangement, each second elongate formation 57 extends along around 85% of the width of the outlet guide vane hub 56. In other arrangements, the second elongate formations 57 may extend along between 20% and 100%, and preferably between 25% and 90%, of the width of the outlet guide vane hub 56. Shorter axial engagement lengths (i.e. length of elongate formations 57, 67 in the axial direction where they overlap) may bias the slotted feature (i.e. the interengaging portions of first and second elongate formations) towards the front section of the outlet guide vane 51 (in arrangements in which the length chosen is near the front). This may increase the axial offset between the forward slotted section and rear bolted panel connection points 68 and so improve the pitch / yaw capability of the joint, and may bias the slotted feature towards the thickest part of the outlet vane 51 (in the arrangement shown).

In the arrangement being described, the second elongate formations 57 extend along around 100% of the outlet guide vane 51 width (in the axial direction) at the OGV's widest point. In other arrangements, the second elongate formations 57 may extend along between 25% and 100% of the outlet guide vane 51 width at its widest point. The outlet guide vanes 51 are widest nearest the engine core 11 in the arrangement being described.

In the arrangement being described, the second elongate formations 57 extend along around 60% of the width (in the axial direction) of the torque box 63 at its widest point. In other arrangements, the second elongate formations 57 may extend along between 20% and 100%, and preferably between 20% and 60%, of the width of the torque box 63. For example, the second elongate formations 57 may extend along around the front 25% of the torque box 63, or along 25% of the torque box, spaced from the front by 5-10% of the torque box width. In the arrangement shown, the second elongate formations 57 extend along substantially the entire width of the upper surface of the torque box 63, in the orientation shown in Figure 4, for example.

In the arrangement shown, the outlet guide vane hub 56 has an axial width of between 200 and 500 mm, and more specifically of around 300 mm, at its widest point. The second elongate formations 57 have a length in the axial direction of around 255 mm. In alternative arrangements, the second elongate formations 57 may have a length of between 50 mm and 300mm.

The first and second elongate formations 57, 67 extend along the full length of the outlet guide vane 51/torque box 63 overlap in the arrangement shown.

In the arrangement being described, the first elongate formations 67 extend along around the same length as the second elongate formations 57.

The first elongate formations 67 are therefore around 255 mm long in the axial direction in the arrangement shown. In alternative arrangements with the same or similar outlet guide vane hub 56 size, the first elongate formations 67 may have a length of between 75 mm and 300mm.

In the arrangement shown, the first and second elongate formations 57, 67 overlap by between 5 mm and 40 mm in the radial direction, and more specifically by around 25 mm. In the arrangement, the slots 57 therefore have a depth (in the radial direction) of at least 25 mm, and the protrusions 67 correspondingly have a height (in the radial direction) of at least 25 mm. The skilled person would appreciate that final engagement (overlap length) and thickness may be decided upon based on factors including the load cases and number of first and second elongate formations 57, 67.

In the arrangement shown, the first and second elongate formations 57, 67 have a width (in the circumferential direction) of between 5 mm and 20 mm, and more specifically of around 10 mm. In the arrangement shown, the widths of the elongate formations 57, 67 are chosen such that the protrusions 67 can fit within the slots 57 with enough clearance to allow sliding, but closely enough to prevent significant circumferential movement of the protrusion 67 within the slot 57. In the arrangement shown, the widths are selected such that the elongate formations 57, 67 are in sliding engagement; the protrusion 67 is a close fit within the slot 57.

In alternative arrangements, an elongate formation 67 arranged to be engaged within a slot 57 may not be a continuous protrusion, but may instead comprise a plurality of shorter, collinear protrusions. Each collinear protrusion may be a radial rod; the row of radial rods extends in the axial direction so as to form an elongate formation, for example a straight line of radial rods providing an axial elongate formation.

In the arrangement being described, each slot 57 is closed at a front (upstream) end 57a. The closed front end 57a of each slot 57 limits motion of the protrusion 67 in a forward/upstream direction. The first elongate formations 67 may therefore slide within the second elongate formations 57 until a front end of the first elongate formation 67a meets the closed end 57a of the slot 57.

In the arrangement shown, the protrusion 67 and slot 57 are both substantially rectangular in radial cross-section, with a triangular front end 57a, 67a (as seen in an axial section). The triangular front end 67a of the protrusion 67 is arranged to fit engagingly within the triangular front end 57a of the slot 57.

In the arrangement shown, the front end 57a, 67a is sloped so as to reduce the radial height of the elongate formation 57, 67 at its front end. This may allow the connection 50 to be more radially compact at the front end.

The detachable connection 50 of the arrangement being described further comprises a bolted connection 68 at a back (downstream) end of the detachable connection portion/of the torque box 63 (the bolted connection 68 is provided by a bolt and rear panel or flange 69 in the arrangement being described, bolt not shown, dotted line in Figure 4 indicates possible bolt location). The bolted connection of the arrangement being described comprises a flange 69 extending radially outward from the engine casing 61. In the arrangement being described, the flange 69 is located at or near a back end of the first elongate formation 67. The flange 69 is arranged to extend along or near a back end of the second elongate formation 57, and to be secured to the housing 55 by a bolt passing through the flange 69 and into the housing 55. In the arrangement being described, the bolt extends into the outlet guide vane hub 56, above the slot 57 therein in the arrangement shown (radially outward therefrom), in an axial direction. In alternative or additional arrangements, more than one bolt may be provided through the flange 69; for example there may be two bolts per interlocking pair of elongate formations 57, 67. In alternative or additional arrangements, the flange 69 may extend from the housing 55 and be connected to the engine casing 61 by the bolt(s).

In alternative arrangements, a different kind of connection may be used instead of or as well as the bolted connection 68. For example, one or more axial dowels, screws, and/or clamps, e.g. one or more vee-clamps, may be used instead of or as well as one or more bolts.

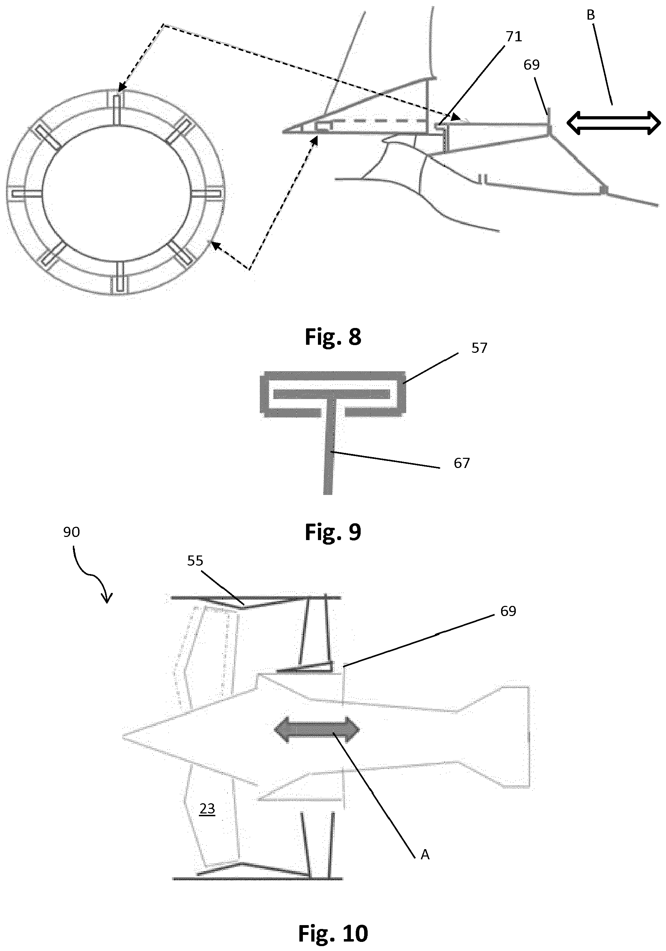

As shown in Figure 10, the use of a flange 69 may facilitate adjustment of the axial location of the engine core 11, 60 with respect to the housing 55/the rest of the aircraft 90. For example, one or more shims may be inserted between the flange 69 and a back end of the outlet guide vane hub 56, so as to adjust the relative position of the core 11, 60 and housing 55. Arrow A indicates the axial direction in which shimming as described can be used to adjust relative position.

As shown most clearly in Figure 10, the inner surface of the engine housing 55 is generally not completely parallel to the axial direction, but rather curved or sloped, such that the inner diameter (and hence the fan blade clearance) varies with axial position. This variation may be described as a hade of the inner annulus of the housing 55. The skilled person will appreciate that the shimming may be used to adjust fan blade tip clearance, for example by moving the hade of the annulus of the gas turbine engine housing 55 over the fan tip 23 axially backwards or forwards.

In the arrangement shown, no bolted connection is provided at the front end 57a, 67a of the detachable connection.

The rear bolted connection 68 may be intended to react axial loads, along to the engine section stator 24. The rear radial flange 69 may allow this bolted connection 68 to react side and vertical loads to the engine casing 61.

The axial elongate formations 57, 67 are spaced around the circumference of the engine core 11, 60. The axial elongate formations 57, 67 may be arranged to react axial loads from the rear bolted panel connection 68 forwards to the engine core casing 61. They may react side and vertical loads, as well as roll torque.

The combination of the axial elongate formations 57, 67 and the rear bolted connection 68 (in particular the flange 69) may be capable of reacting pitch and yaw couples.

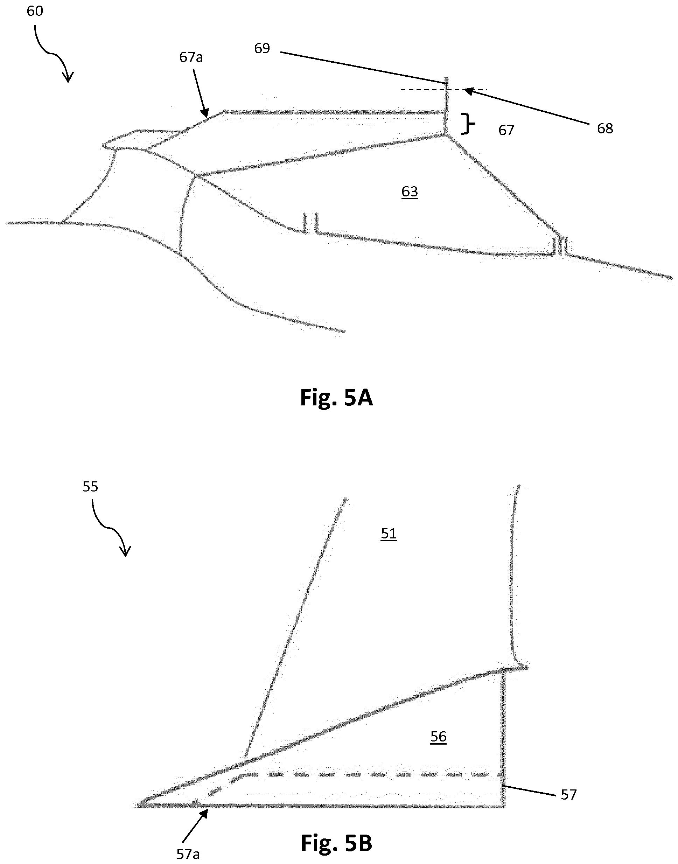

In the arrangement shown in Figures 4 to 6, the detachable connection 50 consists of the interlocking first and second elongate formations 57, 67 and the rear bolted connection 68.

In alternative or additional arrangements, further interlocking formations may be provided, and/or the bolted connection 68 may be replaced with a different connection.

For example, in the arrangement shown in Figures 7 and 8, birdsmouth joints 70 are provided. In the arrangement shown, the birdsmouth joints 70 comprise one or more L-shaped features 71 extending radially from the engine casing 61 and rectangular indentations 72 in the outlet guide vane hub 56.

In some arrangements, the one or more L-shaped features may extend circumferentially around the core 60. In such arrangements, the indentations 72 may be circumferential and rectangular in cross-section.

In alternative arrangements, the L-shaped features 71 may be discrete pegs or the likes. In such arrangements, the indentations 72 may comprise a corresponding number of discrete cuboid indentations 72, each arranged to receive a head of an L-shaped peg 71.

The skilled person will appreciate that shapes may differ, but that angular cross-sections (e.g. triangular, square or rectangular) may be preferable to circular cross sections for the pegs 71 and indentations 72 to limit relative rotation, and so potentially react roll and pitch load distributions. In the arrangement shown, the pegs 71 are arranged circumferentially, one between each pair of adjacent elongate formations 67. The birdsmouth joints 70 may react radial loads at the front end of the detachable connection, so benefitting pitch and yaw load distributions in combination with the rear bolted panel 68. The 'L' shaped features 71 may be part of the OGV hub 56, may be part of a foot of an individual OGV vane 51, or of an elongate formation 57, 67.

Arrow B in Figure 8 indicates the axial sliding direction for the interengaged formations 57, 67. The dotted arrows in Figure 8 indicate where on the radial cross-section the birdsmouth joints 70 and the interlocking formations 57, 67 are positioned in the arrangement being described.

In alternative or additional arrangements, more or fewer pegs 71 may be provided, and/or a birdsmouth joint 70 may be provided by shaped portions of the elongate formations 57, 67, at or near their front ends 57a, 67a.

Additionally or alternatively, other design features could be used to react the radial loads at the front end of the detachable connection 50. For example, one or more axial dowels could be inserted in a front end region 67a of some or all of the elongate protrusions 67. A further example is shown in Figure 9.

In Figure 9, the first elongate formation 67 is a protrusion with a T-shaped cross-section (which may be referred to as a T-shaped protrusion). The stem of the T extends in an at least substantially radial direction away from the engine casing 61 in the arrangement shown. In alternative arrangements, the stem of the T may instead be angled away from the radial direction (tangentially lent); this may facilitate any FBO torque load being transferred to the stem of the T. In the arrangement shown, the head of the T extends at least substantially perpendicular to the stem of the T (i.e. in an at least approximately circumferential direction). In arrangements with a differently angled stem of the T, the head of the T may extend at least substantially perpendicular to the stem of the T, or in an at least approximately circumferential direction.

In the arrangement of Figure 9, the second elongate formation 57 is a slot with a T-shaped cross-section, in that the walls/edges of the slot form at least approximately a C-shape and/or the slot is T-shaped with the opening at the base of the stem of the T, such that the opening of the slot 57 is not its widest portion. The slot 57 has an opening narrower than its widest width, in cross-section. The slot 57 is angular, not curved, in the arrangement shown. The slot 57 is arranged to receive the head of the T-shaped protrusion 67. The slot 57 may therefore limit radial movement of the protrusion 67. Like birdsmouth joints 70, or axial dowels, the skilled person will appreciate that the restriction of radial movement may help to react pitch and yaw couples in a base region of the outlet guide vanes 51.

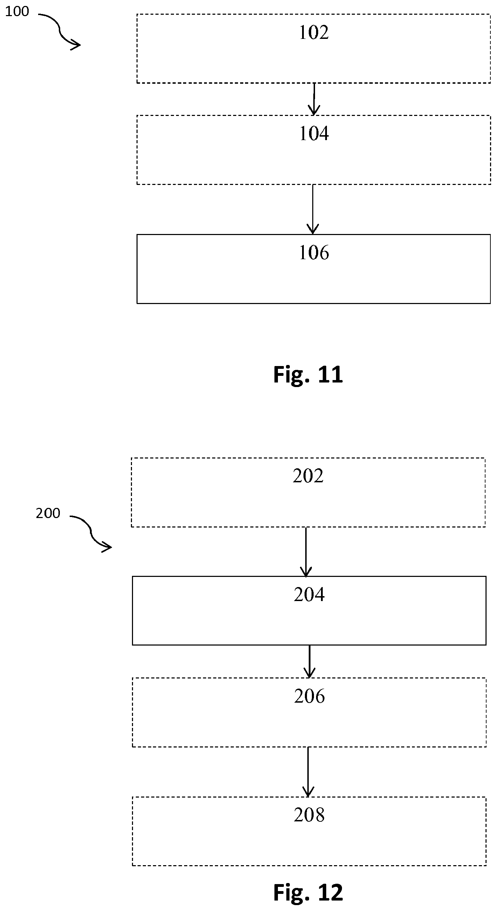

Figure 11 is a schematic illustration of a method 100 of detaching a core module 60 of a gas turbine engine 10 from a gas turbine engine housing 55.

At step 106, the core engine module 60 is slid backwards with respect to the housing 55 until one or more interengaged first and second elongate formations 57, 67 on the outer surface of the module 60 and on the housing 50 respectively are disengaged.

Prior to the sliding 106, one or more other steps may be performed as part of the detachment process 100.

At step 102, one or more, or optionally all, fan blades 23 may be removed from the engine core module 60; the fan blades 23 are attached to a fan disc behind the nose cone 64 in the arrangement shown. In the arrangement shown, the housing 55 narrows behind the fan 23, such that the engine core module 60 could not be slid backwards with the fan blades 23 attached. The skilled person will appreciate that, in some arrangements, the fan blades 23 may be removed as a part of the engine core 60, so removing the blades 23 before the sliding step 106 may not be necessary. In such arrangements, the housing 55 may be differently shaped.

At step 104, one or more bolted connections 68 are undone (i.e. bolts are removed) from a rear end of the detachable connection. A fairing may be removed to provide access to the bolts. In alternative arrangements, a different type of connection other than a bolted connection 68 may be used at the rear end of the detachable connection 50.

The skilled person will appreciate that steps 102 and 104 may be performed in the opposite order, not performed at all, or replaced with other steps.

Figure 12 is a schematic illustration of a method 200 of attaching a module 60 of a gas turbine engine 10 to a gas turbine engine housing 55.

At step 204, the core engine module 60 is slid forwards with respect to the housing 55 with the first and second elongate formations 57, 67 engaged. The module 60 may be slid forwards until the elongate formations 57, 67 are fully engaged, e.g. until the core engine module 60 cannot be slid forward any further. The limitation on forward movement may be provided by a closed front end of a slot.

The method may further comprise, at step 202, positioning the module 60 and the housing 55 so as to align first elongate formations 67 on the module 60 with the second elongate formations 57 on the housing 55. Alignment of the elongate formations 57, 67 may facilitate alignment of the core engine module 60 with the housing 55.

In some arrangements, the first and second elongate formations 57, 67 may be arranged such that only one relative orientation of the core engine module 60 and housing 55 (a selected, correct orientation) is possible; the core engine module 60 may not fit within the housing 55 at other orientations due to clashing elongate formations 57, 67. For example, an uppermost second formation 57 may be a protrusion and the rest of the second formations 57 may be slots, and uppermost first formation 67 may be a slot and the rest of the first formations 67 may be protrusions; in such an arrangement, at any relative orientation other than the correct orientation, a protrusion 57 of the second elongate formations 57 may be in contact with a protrusion 67 of the first elongate formations 67, so preventing sliding of the module 60 into the housing 55.

At step 206, once the core engine module 60 has been slid into place, one or more bolted connections 68 are secured (i.e. bolts are inserted and tightened) from a rear end of the detachable connection 50. A fairing may be removed to provide access to the bolts. In alternative arrangements, a different type of connection other than a bolted connection may be used at the rear end of the detachable connection.

At step 208, one or more, or optionally all, fan blades 23 may be attached to the fan disc and then the nose cone 64 fitted. In the arrangement shown, the housing 55 narrows behind the fan 23, such that the engine core module 60 could not be slid into the housing 55 with the fan blades 23 attached, as it would be too wide. The skilled person will appreciate that, in some arrangements, the fan blades 23 may be part of the engine core module 60, so attaching blades 23 after the sliding step 106 may not be necessary. In such arrangements, the housing 55 and/or the blades 23 may be differently shaped so as to allow the engine core module 60 to be slid into the housing 55 with the blades 23 in place.

In additional or alternative arrangements, the engine core module 60 may be slid into the housing 55 from the front instead of from the back. In such arrangements, any slots 57 may be closed at the back instead of the front, so as to limit backward movement. There may be no need to remove and reattach fan blades in such arrangements.

The skilled person will appreciate that steps 206 and 208 may be performed in the opposite order, not performed at all, or replaced with other steps.

The method 200 may further comprise measuring tip clearance (between the outer end of the fan blades 23 and the inner surface of the fan casing/housing 55) to decide whether or not axial position should be adjusted, for example by shimming.

The method 200 may further comprise inserting one or more shims (not shown) so as to adjust relative axial position (A) of the core engine module 60 and housing 55. The one or more shims may be inserted between the flange 69 of a bolted rear connection 68 and the elongate formations 57, 67. Shimming may allow adjustment of the fan tip clearance.

The skilled person will appreciate that relative axial position (A) of the core engine module 60 and housing 55 may be adjusted when the core engine module 60 is not being removed from/reinserted into the housing 55. It may be desirable to adjust axial position so as to, for example, adjust fan tip clearance (i.e. space between an outer end of fan blades 23 and the housing 55) at other times.

To adjust the axial position of the engine core 60 with respect to the housing 55, the engine core 60 may be slid with respect to the housing 55 so as to create space for one or more shims to be added or removed, for example by sliding the engine core 60 backwards with respect to the housing. The engine core 60 may need to be disconnected from the housing 55 prior to sliding, e.g. by removing a rear bolted connection 68.

One or more shims may then be added or removed - in the arrangement shown, in a gap between a rear bolted plate or flange 69 of the engine core 60 and the rear of the OGV hub 56, although the skilled person will appreciate that many other arrangements are possible. The presence or absence of shims, or the size and/or number thereof, may serve to adjust an extreme relative axial position of the core engine module 60 and housing 55; i.e. the maximum extent of forward sliding of the engine core 60 with respect to the housing 55 is limited by the presence of shims.

The engine core 60 may be slid, for example forwards, with respect to the housing 55 until the extreme relative axial position is reached - i.e. until the frontmost shim (if present) or the bolted plate/flange 69 (if no shims are present) makes contact with the rear of the OGV hub 56 in the arrangement shown.

The engine core 60 may then be secured to the housing 55 in the extreme relative axial position, for example by re-inserting the bolt and tightening it to form the bolted connection 68.

The method may further comprise assessing the fan tip clearance so as to determine how many shims to use, and/or the size of shim(s) to use.

The sliding may comprise relative movement in an axial direction using interengaged first 67 and second 57 elongate formations on the engine core 60 and housing 55, respectively, and may further comprise a rotational component.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and subcombinations of one or more features described herein.

## Claims

1. A gas turbine engine (10) for an aircraft (90) comprising:
an engine core (11) comprising a turbine (19), a compressor (14), and a core shaft (26) connecting the turbine to the compressor;
an engine casing (61) arranged to at least partially surround the engine core (11), the engine casing (61) comprising at least one first elongate formation (67) on its outer surface, the at least one first elongate formation (67) extending in an axial direction; and
a housing (55) arranged to at least partially surround the engine core (11), the housing (55) comprising at least one second elongate formation (57) on an inner surface of the housing (55), the at least one second elongate formation (57) extending in the axial direction,
wherein the engine casing (61) is detachably connected to the housing (55), the detachable connection comprising interengagement of the first and second elongate formations (57, 67).

2. The gas turbine engine (10) of claim 1, wherein the housing (55) comprises a plurality of outlet guide vanes (51) extending inwardly towards the engine casing (61) and an outlet guide vane hub (56) connected to an inner end of each outlet guide vane (51), and wherein the at least one second elongate formation (57) is on an inner surface of the outlet guide vane hub (56).

3. The gas turbine engine (10) of claim 1, the housing (55) comprises a plurality of outlet guide vanes (51) extending inwardly towards the engine casing (61) and wherein each of the plurality of outlet guide vanes (51) has a second elongate formation (57) on its inner end, such that the interengagement of the first and second elongate formations (57, 67) connects each outlet guide vane (51) to the engine casing (61).

4. The gas turbine engine (10) of any preceding claim wherein the first and second elongate formations (57, 67) curve around the engine core (11) so as to form at least a portion of a spiral oriented in the axial direction.

5. The gas turbine engine (10) of any preceding claim wherein the first and second elongate formations (57, 67) comprise at least one slot extending in the axial direction and at least one protrusion extending in the axial direction and arranged to be received in the corresponding slot.

6. The gas turbine engine (10) of claim 5, wherein the at least one first elongate formation (67) is a protrusion and the at least one second elongate formation (57) is a slot arranged to receive the protrusion.

7. The gas turbine engine (10) of claim 5 or claim 6, wherein the at least one protrusion (67) is T-shaped in cross-section and the at least one slot (57) is T-shaped in cross-section and arranged to receive a head of the T-shaped protrusion (67).

8. The gas turbine engine (10) of any of claims 5 to 7, wherein the or each slot (57) is closed at one end (57a), and wherein optionally the or each slot (57) is closed at a front end (57a), such that the closed end (57a) is arranged to limit movement of a corresponding protrusion (67) in a forward axial direction within the or each slot (57).

9. The gas turbine engine (10) of any preceding claim wherein the first and second elongate formations (57, 67) are arranged to allow axial sliding movement between the housing (55) and the engine casing (61).

10. The gas turbine engine (10) of any preceding claim wherein the detachable connection (50) comprises one or more L-shaped pegs (71), with a head of the or each L-shaped peg (71) oriented in an axial direction and arranged to be received in an aperture (72) oriented in an axial direction.

11. An engine core module (60) of a gas turbine engine (10) for an aircraft, the module (60) comprising:
an engine core (11) comprising a turbine (19), a compressor (14), and a core shaft (26) connecting the turbine to the compressor; and
an engine casing (61) arranged to at least partially surround the engine core (11), the engine casing (61) comprising at least one first elongate formation (67) on its outer surface, the at least one first elongate formation (67) extending in an axial direction;
wherein the module (60) is arranged to be detachably connectable to a housing (55), the detachable connection comprising interengagement of the at least one first elongate formation (67) with at least one second elongate formation (57) on the housing (55).

12. A housing (55) arranged to be mounted on an aircraft (90) and to at least partially surround an engine core module (60) of a gas turbine engine (10) of the aircraft (90), the housing (55) comprising at least one second elongate formation (57), the at least one second elongate formation (57) extending in the axial direction,
wherein the housing (55) is arranged to be detachably connectable to the engine core module (60), the detachable connection comprising interengagement of the at least one second elongate formation (67) with at least one first elongate formation (67) on the engine core module (60).

13. A method (100) of detaching a core engine module (60) of a gas turbine engine (10) from a housing (55) arranged to be mounted on an aircraft (90), the method comprising sliding (106) the module (60) with respect to the housing (55) until interengaged first and second elongate formations (67, 57) on the outer surface of the module (60) and on the housing (55) respectively are disengaged.

14. The method (100) of claim 13 further comprising, prior to sliding (106) the core engine module (60), removing (104) one or more bolts from a region of a back end of a first or second elongate formation (57, 67) of the interengaged first and second elongate formations.

15. A method (200) of attaching a core engine module (60) of a gas turbine engine (10) to a housing (55) arranged to be mounted on an aircraft (90), the method comprising:
positioning (202) the module (60) and the housing (55) so as to align one or more first elongate formations (67) on the module with one or more second elongate formations (57) on the housing; and
sliding (204) the module (60) with respect to the housing (55) with the first and second elongate formations (57, 67) engaged.
